# EUROPÄISCHE PATENTSCHRIFT

(11) **EP 0 374 655 B1**
(45) Veröffentlichungstag und Bekanntmachung des Hinweises auf die Patenterteilung: **15.09.1993**
(21) Anmeldenummer: 89122773.8
(22) Anmeldetag: 09.12.1989
(51) Int. Cl.: C09B 56/04, C09K 19/60, C08K 5/42

(54) **Lichtpolarisierende Filme oder Folien enthaltende Stilbenfarbstoffe**
Light-polarising films or foils containing stilbene pigments
Film ou feuille polarisant contenant des colorants de stilbène

(30) Priorität: 23.12.1988 DE 3843411; 01.07.1989 DE 3921669
(43) Veröffentlichungstag der Anmeldung: 27.06.1990
(73) Patentinhaber: BAYER AG, 51368 Leverkusen (DE)
(72) Erfinder: Claussen, Uwe, Dr., D-5090 Leverkusen (DE); Kröck, Friedrich W. Dr.,, D-5068 Odenthal-Glöbusch (DE)

(56) Entgegenhaltungen:
- EP-A- 0 182 632
- CHEMICAL ABSTRACTS, Band 104, Nr. 10, 1986, Seite 53, Zusammenfassung Nr. 69953w, Columbus, Ohio, US; & JP-A-60 168 743 (NIPPON KAYAKU CO., LTD) 02-09-1985

## Beschreibung

Die Erfindung betrifft lichtpolarisierende Filme oder Folien enthaltend Stilbenfarbstoffe.

Filme auf der Basis von Polyvinylalkohol, die Iod oder dichroitische Farbstoffe als polarisierende Agentien enthalten, sind bekannt.

Technische Verwendung haben bislang ganz überwiegend die iodhaltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese eine ausgezeichnete Lichtechtheit und hervorragende dichroitische Eigenschaften im langwelligen Bereich des sichtbaren Spektrums. Das wirksame Agens dieser Filme ist der Iod-Polyvinylalkohol-Komplex (M.M. Zwick, J. Appl. Polym. Sci. 9, 2393-2424 (1965)), der das Tageslicht zwar breitbandig, aber nicht vollständig absorbiert.

Im kurzwelligen Bereich ist ein "Loch", d.h. ein Bereich verminderter Extinktion, weswegen die Folien eine blaue Eigenfarbe zeigen.

Dies hat nachteilige Folgen, wenn man weißes Licht erzeugen will. Das unpolarisiert durchgelassene Licht vermindert den Dichroismus und damit die Polarisationsleistung in diesem Bereich. Um ihn wieder anzuheben, ist man gezwungen, die Konzentration an Iod-Komplex zu erhöhen. Diese Korrektur im kurzwelligen Bereich zieht aber eine übermäßige Extinktion im langwelligen Bereich nach sich. Die Folge ist eine deutliche Verminderung des durchgelassenen Lichts in der Durchgangsstellung, verbunden mit einer Minderung der Helligkeit der Anzeige, die mit dieser Folie bestückt wird. Um zu vertretbaren Helligkeiten zu gelangen, muß man Kompromisse schließen.
Eine wichtige kritische Größe eines Displays ist die Ablesbarkeit bei verschiedenen Beleuchtungsverhältnissen; sie wird üblicherweise als "Perceived contrast ratio" (PCR = T⊥/T||) angegeben; dieses soll möglichst groß sein. Aus diesem folgt, daß die Transmission einerseits in der Sperrstellung (T||) so klein wie möglich (Ablesbarkeit bei Dunkelheit), andererseits in der Durchgangsstellung (T⊥) so groß wie möglich (Ablesbarkeit bei Helligkeit) gemacht werden muß. Dies erfordert eine ganz gleichmäßige Polarisationsleistung des Filters über den gesamten spektralen Bereich, welche mit der Iodfolie prinzipiell nicht erreicht werden kann.

Es hat nicht an Versuchen gefehlt, Iod durch Farbstofftripel dichroitischer Farbstoffe zu ersetzen, um ein Neutralgrau mit gleichmäßigem Dichroismus zu erzeugen. Allerdings bedarf es hierzu einer Gamme sehr leistungsfähiger Farbstoffe. Sie müssen neben guten Licht- und Wetterechtheiten eine hohe Extinktion und einen hohen Dichroismus in der Matrix haben; außerdem dürfen sie keine Nebendichten mit geringerem Dichroismus besitzen. So sind vorzugsweise Polyazofarbstoffe vorgeschlagen worden, beispielsweise auf der Basis der 4-Nitro-4'-amino-flavonsäure (JA 59-145255, JA 60-156759, JA 60-168743) oder des substituierten Benzidins (JA 61 255 304). Daneben sind zahlreiche einzelne Direktfarbstoffe genannt worden, beispielsweise Direct Red 2, 31, 81, Direct Orange 26, 107, Direct Green 85, Direct Blue 1, 106, 107, 109, 190, 202, Direct Black 17, 19, Direct Yellow 12, 44 usw. (JA 60-230 606, JA 60-159 705, EP 182 632). Obgleich aber der Dichroismus bei den Farbstoffen eine verbreitete Eigenschaft ist, (vgl. W. Hanle, H. Scherer, Zeitschr. Naturforsch. 6a, 437-439 (1951)) gelang es bisher nicht, die spektralen Eigenschaften der Iodfolie zu erreichen oder zu übertreffen. Dies ist einmal dem Fehlen guter Blaunuancen, zum anderen der Forderung nach dem hohen Dichroismus des Systems Farbstoff/Matrix zuzuschreiben.

Es wurde nun überraschenderweise gefunden, daß bestimmte Stilbenfarbstoffe hervorragende dichroitische Eigenschaften aufweisen und sich sehr gut zur Herstellung von lichtpolarisierenden Filmen oder Folien eignen.

(Eine im folgenden einmal gegebene Definition eines Restes oder Index wird im weiteren Text beibehalten.)

Die Erfindung betrifft lichtpolarisierende Filme oder Folien enthaltend Farbstoffe, die in Form der freien Säure der Formel 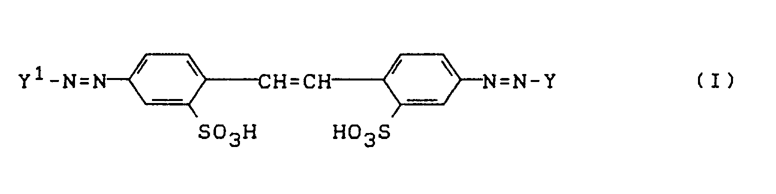
entsprechen, wobei
- Y, Y¹: einen gegebenenfalls substituierten Aryl- oder heterocyclischen Rest darstellen.

Insbesondere bedeuten Y und Y¹ 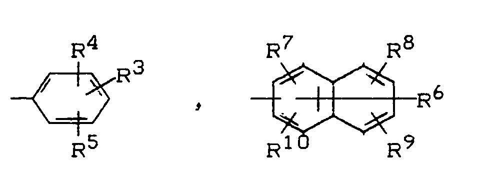
worin
- R³: H, -OH, -OR¹, -NH₂, -NHR¹, -NR¹R²` -NHCOR¹, -O-CO-R¹, -N=N-R¹¹, einen heterocyclischen Rest,
- R⁴, R⁵, R⁷, R⁸, R⁹, R¹⁰: H, Halogen, -OH, -OR¹, -NH₂, -NHR¹, -NR¹R², -R¹, -SO₃H, -NHCOR¹, -O-CO-R¹, -SO₂-NH₂, -SO₂-NHR¹, -SO₂NR¹R²,
- R⁶: H, -N=N-R¹¹, heterocyclischer Rest und
- R¹¹: einen gegebenenfalls substituierten Arylrest, vorzugsweise gegebenenfalls einen substituierten Phenyl- oder Naphthylrest oder einen gegebenenfalls substituierten heterocyclischen Rest bezeichnen und die höchstens 8 Azobrücken enthalten.
- R¹ und R²: bezeichnen gegebenenfalls durch O und/oder S unterbrochenes Alkyl, Cycloalkyl, Aryl oder Aralkyl.

Bevorzugte Reste Y, Y¹ und R¹¹ der Benzolreihe sind die folgenden: 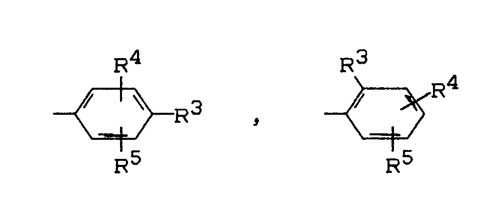
Insbesondere sind Reste gemeint, die sich von Phenol und Anilin sowie deren Substitutionsprodukten, gegebenenfalls mit anschließender Alkylierung oder Acylierung ableiten.

Als Beispiele seien genannt: 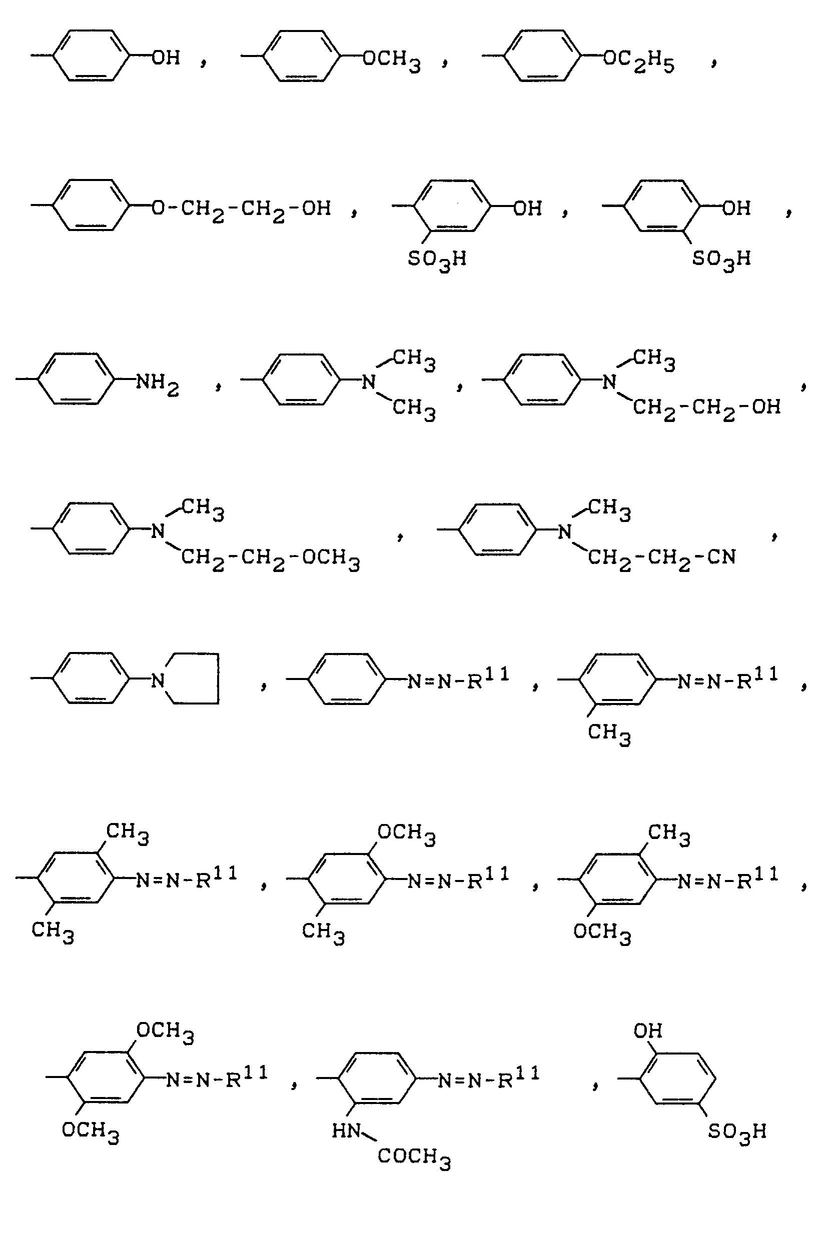
Bevorzugte Reste Y, Y¹ und R¹¹ der Naphthalinreihe werden im folgenden aufgeführt: 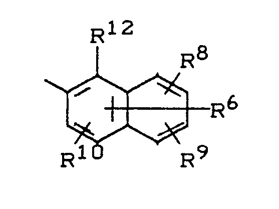
- R¹² =: -OH, -NH₂ 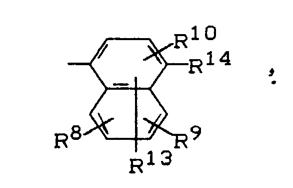
- R¹³ =: H, wenn R¹⁴ = -N=N-R¹¹ oder H, -N=N-R¹¹, wenn R¹⁴ = -OH, -NH₂
- R¹⁴ =: -OH, -NH₂, -N=N-R¹¹ 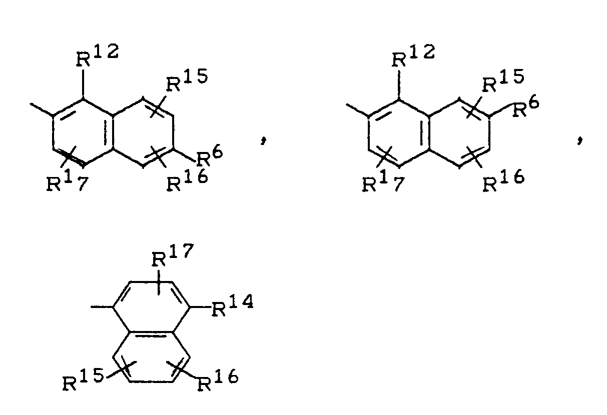
- R¹⁵, R¹⁶ =: H, -OH, OR¹, -O-CO-R¹, -NH₂, -NHR¹, -NR¹R², -NHCOR¹, -SO₃H,
- R¹⁷ =: H, -SO₃H.

Insbesondere werden folgende Reste Y, Y¹ und R¹¹ der Naphthalinreihe bevorzugt: 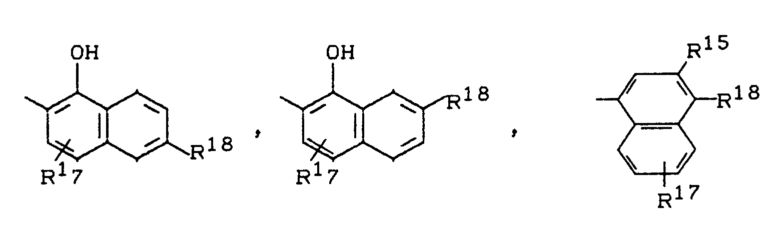
- R¹⁸ =: H, OH, NH₂, -NH-CO-R¹, -NH-R¹, -N=N-R¹¹, -SO₃H 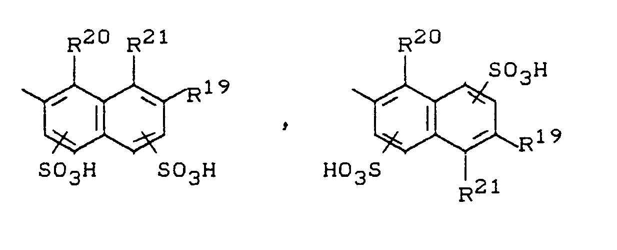
- R¹⁹ =: H, -N=N-R¹¹,
- R²⁰, R²¹ =: OH, NH₂, -O-CO-R¹, -NH-CO-R¹ 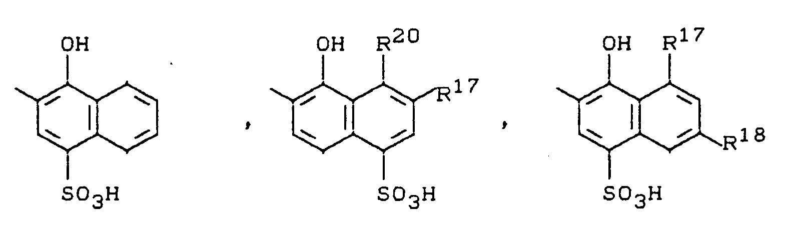
Bevorzugt leiten sich Y, Y¹ und R¹¹ von der (substituierten) I-Säure ab: 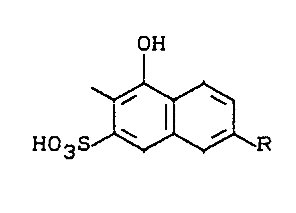
- R =: NH-R¹, -NH-CO-R¹, -N=N-R¹¹.

Alkyl (R¹, R²) steht bevorzugt für C₁-C₆-Alkyl (Methyl, Ethyl).

Cycloalkyl (R¹, R²) steht vorzugsweise für C₃-C₇-Cycloalkyl (Cyclopentyl, Cyclohexyl).

Aryl (R¹, R²) steht bevorzugt für Phenyl und Naphthyl.

Aralkyl (R¹, R²) steht bevorzugt für Phenyl-C₁-C₄-alkyl (Benzyl, Phenethyl).

Als Substituenten für die Alkyl- und Cycloalkylreste (R¹, R²) kommen z.B. Halogen (Cl, Br, F), -OH, -CN, C₁-C₄-Alkoxy u.a. in Betracht.

Als Substituenten für die Aryl- und Aralkylreste (R¹, R²) kommen z.B. Halogen (Cl, Br, F), -OH, C₁-C₄-Alkoxy (Methoxy), C₁-C₄-Alkyl (Methyl), CF₃, NO₂, CN in Betracht.

Bevorzugte Reste R³ und R⁶ der Heterocyclenreihe haben die Formel: 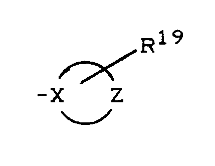
wobei
- X: ein C- oder N-Atom ist, wobei die freie Valenz des Kohlenstoffs durch eine Doppelbindung abgesättigt ist, und
- Z: für die restlichen Glieder eines vorzugsweise 5- oder 6-gliedrigen Monocyclus oder eines Bi- oder Tricyclus steht,
der 1 bis 3 Heteroatome aus der Reihe N, O, S enthalten kann und gegebenenfalls substituiert ist.

Insbesondere leiten sie sich von folgenden Heterocyclen-Systemen ab:
Triazol, Pyrazol, Benztriazol, Naphthotriazol, Oxazol, Imidazol, Thiazol, Oxadiazol.

Bevorzugte Reste Y, Y¹ und R¹¹ der Heterocyclenreihe haben die Formel 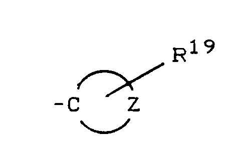
wobei
- Z: für die restlichen Glieder eines vorzugsweise 5- oder 6-gliedrigen Monocyclus oder eines Bi- oder Tricyclus steht,
der 1 bis 3 Heteroatome aus der Reihe N, O, S enthalten kann und gegebenenfalls substituiert ist,
wobei die freie Valenz des Kohlenstoffs durch eine Doppelbindung abgesättigt ist.

Insbesondere leiten sich Y, Y¹ und R¹¹ von folgenden Heterocyclen-Systemen ab:
Thiophen, Triazol, Pyrazol, Pyridin, Benztriazol, Pyridon, Naphthotriazol.

Zusätzlich leitet sich R¹¹ von folgenden HeterocyclenSystemen ab:
Thiadiazol, Thiazol, Benzthiazol.

Als gegebenenfalls substituierte heterocyclische Reste (Y, Y¹, R¹¹) kommen insbesondere 5-Amino- oder 5-Hydroxypyrazol-Reste, z.B. 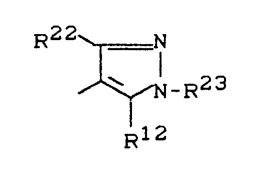
mit
- R²² =: H, C₁-C₄-Alkyl (Methyl), -COOH,
- R²³ =: 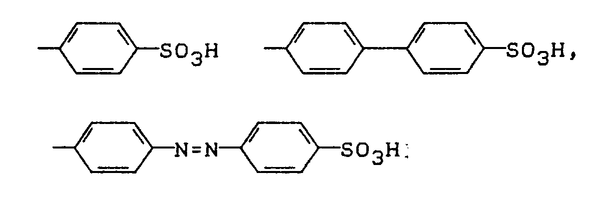
in Betracht.

Weitere bevorzugte Reste Y, Y¹ und R¹¹ sind solche der Formel: 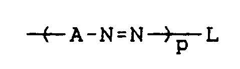
wobei
- A: ein gegebenenfalls substituierter Phenylen- oder Naphthylenrest,
- L: ein gegebenenfalls substituierter Phenyl- oder Naphthylrest und
- p: 1, 2, 3 ist.

Insbesondere steht A für 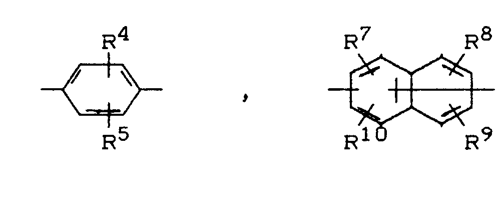
und L für

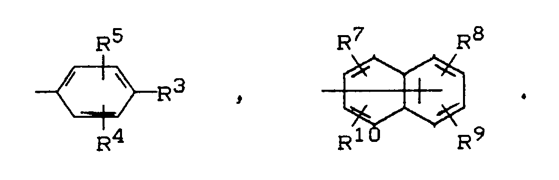

Bevorzugt ist die Gruppe der symmetrischen Verbindungen der Formel 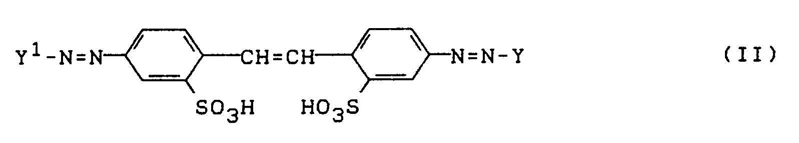
mit Y¹ = Y.

Eine weitere bevorzugte Gruppe von Verbindungen entspricht der Formel 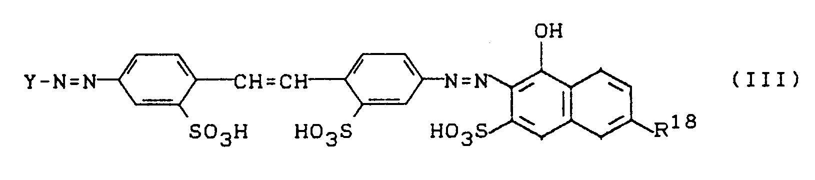
Eine weitere bevorzugte Gruppe von Farbstoffen entspricht der Formel 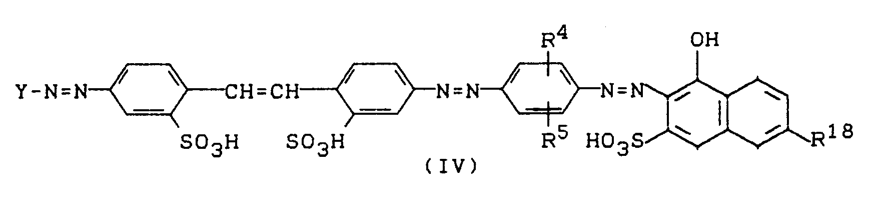
Eine weitere bevorzugte Gruppe von Farbstoffen entspricht der Formel 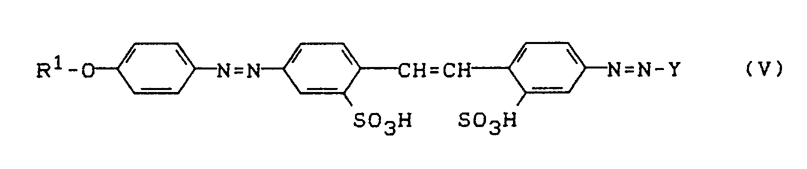
Die Herstellung der Farbstoffe I kann in Analogie zu literaturbekannten Verfahren erfolgen. Als Ausgangsprodukt dient dabei 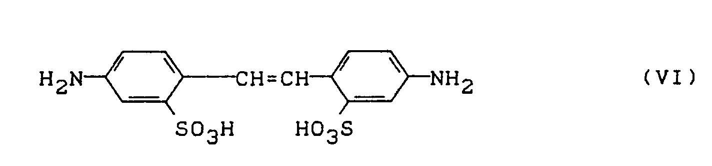
das sich tetrazotieren und auf Kupplungskomponenten kuppeln läßt. Freie Aminogruppen der erhaltenen Kupplungsprodukte lassen sich diazotieren und wiederum kuppeln.

Die Verbindung 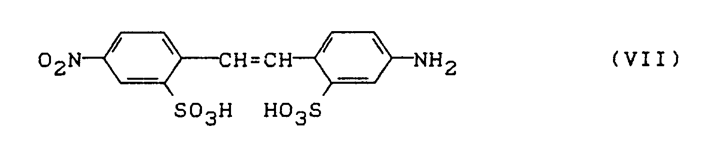
läßt sich zur Herstellung unsymmetrischer Farbstoffe verwenden. Dazu wird VII diazotiert und auf geeignete Kupplungskomponenten gekuppelt. Freie Aminogruppen der erhaltenen Kupplungsprodukte lassen sich diazotieren und wiederum kuppeln.

Die Nitrogruppe der erhaltenen Farbstoffe läßt sich reduzieren, und man kann die erhaltene Aminoverbindung diazotieren und auf geeignete Kupplungskomponenten kuppeln. Dadurch sind die unsymmetrischen Verbindungen der Formel I zugänglich.

Die Monoaminoverbindung VII läßt sich nach Sandmeyer in die entsprechenden Halogen-, CN- oder -OH-Verbindungen etc. (vgl S.Y. Zherdeva et al., J. Org.Chemie USSR 16 (1980) 383) oder z.B. in diverse Derivate (Triazole, Pyrazole etc.) überführen. Nach Reduktion der Nitrogruppe lassen sich die erhaltenen Monoaminoverbindungen nach Diazotierung zu Azofarbstoffen kuppeln.

Die Verbindungen VII läßt sich weiterhin in bekannter Weise an der Aminogruppe acylieren (acetylieren, benzoylieren); durch anschließende Reduktion der Nitrogruppe entstehen aminogruppenhaltige Zwischenprodukte, z.B. 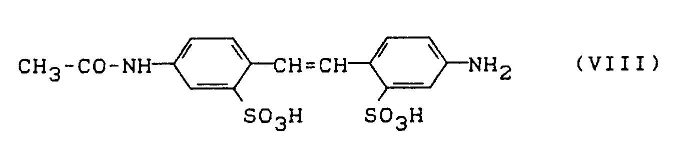
die sich ebenso wie VII zur Herstellung unsymmetrischer Farbstoffe eignen. Insbesondere lassen sie sich diazotieren und auf geeignete Kupplungskomponenten kuppeln. Nach Abspaltung der Acylgruppe lassen sich die erhaltenen Farbstoffe erneut diazotieren und kuppeln. Die Verbindung VIII lassen sich ebenso wie VII nach Sandmeyer in Derivate überführen, die nach Abspaltung der Acylgruppe diazotiert und zu Azofarbstoffen gekuppelt werden können.

Insbesondere betrifft die Erfindung lichtpolarisierende Filme (Folien), die ein organisches Polymer und eine oder mehrere Verbindungen der Formel I enthalten.

Bei dem organischen Polymer handelt es sich vorzugsweise um ein transparente Filme bildendes orientiertes Polymer, das mit saure Gruppen enthaltenden Farbstoffen verträglich ist. Beispiele für solche Polymere sind:
Polyamide, Cellulose(acetat), Vinylalkoholhomo- und -copolymere sowie Vinylacetathomo-und -copolymere, wobei als Comonomere z.B. Ethylen, Propylen, Crotonsäure, (Meth)Acrylsäure, Maleinsäure vorliegen können. Bevorzugt eingesetzt werden Polyvinylalkohole, die durch vollständige oder teilweise Verseifung von Polyvinylacetat hergestellt worden sind, insbesondere Typen, die in 4 %iger wäßriger Lösung eine Viskosität > 4 mPa.sec², vorzugsweise 20-70 mPa.sec², bei 20°C und einen Verseifungsgrad > 80 Mol-%, vorzugsweise 85-100 Mol-%, aufweisen.

Die Filme haben vorzugsweise eine Dicke von 10 bis 150 µ.

Die Filme enthalten vorzugsweise 0,01-10 Gew.-%, besonders bevorzugt 0,5-6 Gew.-%, bezogen auf das Filmgewicht, Farbstoff.

Die Einfärbung der Filme geschieht auf übliche Weise, z.B. durch Einfärben des (in Wasser) gelösten Polymeren.

Aus der Lösung wird der Film in an sich bekannter Weise hergestellt.

Es empfiehlt sich, die Farbstoffe oder Farbstoffsalze vor ihrem Einsatz, z.B. durch Umkristallisieren, Extraktion und/oder Dialyse, von Fremdsalzen zu befreien.

Vorzugsweise werden solche Folien eingesetzt, die bei erhöhter Temperatur, vorzugsweise bei 80-160°C, um 300-1000 % gestreckt worden sind.

Gewünschtenfalls können die farbstoffhaltigen Filme auch einer Nachbehandlung, z.B. mit wäßriger Borsäurelösung, zwecks Verbesserung der Lichtdurchlässigkeit oder des Polarisationskoeffizienten unterworfen worden. Die Bedingungen, unter denen diese Nachbehandlung durchgeführt wird, können abhängig vom Filmmaterial und Farbstoff schwanken. Vorzugsweise arbeitet man mit einer 1 bis 15 gew.-prozentigen, besonders bevorzugt 5 bis 10 gew.-prozentigen, Borsäurelösung bei 30 bis 80°C, besonders bevorzugt 50 bis 80°C. Vorzugsweise setzt man der Borsäurelösung Tenside und gegebenenfalls anorganische Salze zu. Die Tenside können nicht-ionisch, kationisch oder anionisch sein, bevorzugt sind sie nicht-ionisch.

Beispiele für nicht-ionische Tenside sind: Additionsprodukte von Ethylenoxid an höhere Alkohole oder Additionsprodukte von Ethylenoxid an Nonylphenol. Vorzugsweise verwendet man, bezogen auf Wasser, 0,005 bis 0,5 Gew.-%, besonders bevorzugt 0,02 bis 0,2 Gew.-% Tensid.

Als anorganische Salze kommen vorzugsweise Natriumsulfat und weiterhin Kaliumsulfat, Natriumchlorid, Kaliumchlorid, Natriumnitrat, Kaliumnitrat in Betracht. Bezogen auf Wasser werden vorzugsweise 0,1 bis 5 Gew.-%, besonders bevorzugt 0,3 bis 3 Gew.-%, anorganische Salze eingesetzt. Gewünschtenfalls kann noch eine Fixierungsbehandlung mit einer wäßrigen Lösung einer hochmolekularen kationischen Verbindung vorgenommen werden.

Die lichtpolarisierenden Filme oder Folien können in an sich bekannter Weise mit anderen Materialien compoundiert oder laminiert werden. Als Schutzüberzug eignen sich z.B. Folien aus einem Tetrafluorethylen-Hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri)acetat, -propionat oder -butyrat.

Der Dichroismus des Systems läßt sich durch Zusätze niederer ein- oder mehrwertiger Alkohole wie Methanol, Ethanol oder Glykol, Glycerin, Trimethylolethan, Trimethylolpropan, Pentaerythrit, Sorbit, deren Ether wie Glykolmonomethylether, Glykolmonoethylether, Glykoldimethylether, Diglykoldiethylether, niederen Aminen wie Propylamin und Hydroxyaminen wie Propanolamin oder Amiden wie DMF, N-Methylpyrrolidon, Pyrrolidon, ε-Caprolactam zur Gießlösung beträchtlich verstärken. Die Additive können allein oder vorteilhafter, in Mischungen eingesetzt werden, wobei als Mischungsbestandteile auch niedrige einwertige Alkohole, z.B. Methanol, Ethanol, i-Propanol auftreten können.

Die Additive werden der Gießlösung vorzugsweise in Mengen zugesetzt, die 5 bis 50 Gew.-%, bezogen auf die Gießlösung, ausmachen.

Außer ihrer Verwendung in lichtpolarisierenden Filmen können die Farbstoffe der Formel I allein oder in Mischungen zum Sichtbarmachen geordneter Strukturen in der Analytik von Polymeren und in biologischen Materialien eingesetzt werden.

### Beispiel 1

a) Farbstoff-Synthese 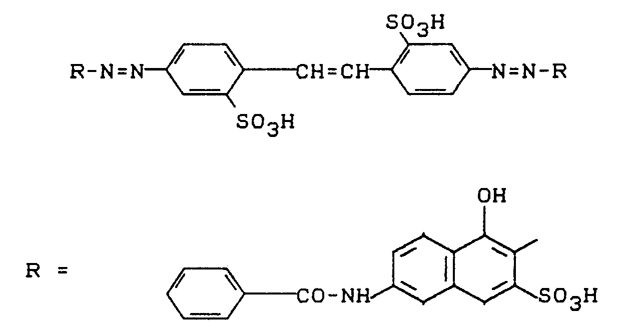 37 g (0,1 M) 4,4'-Diamino-stilben-2,2'-disulfonsäure werden in 1 l Wasser suspendiert. Dazu gibt man 83 ml konz. Salzsäure und tropft bei Raumtemperatur langsam 51 ml (0,22 M) Natriumnitritlösung (als ca. 30 %ige Lösung) ein. Die Suspension wird über Nacht gerührt. Danach soll ein Nitrit-Überschuß nachweisbar sein, der durch Zugabe von Amidosulfonsäurelösung zerstört wird. Diese Tetrazoniumsalz-Lösung wird bei Raumtemperatur unter pH-Kontrolle langsam zu einer Lösung von 69 g (0,2 M) 1-Hydroxy-6-benzoylamino-naphthalin-3-sulfonsäure in 0,5 l Wasser eingetropft, wobei der pH-Wert durch Zutropfen von 10-prozentiger Natronlauge zwischen 6,5 und 7 gehalten wird. Nach Rühren über Nacht wird der ausgefallene Farbstoff abgesaugt und mehrfach mit kleinen Portionen Wasser gewaschen. Dann wird der Farbstoff in Wasser gelöst einer Dialyse unterworfen, um Salze abzutrennen; anschließend wird die erhaltene Farbstoff-Lösung eingedampft und der Rückstand getrocknet. Ausbeute 98,7 g.
b) Herstellung der Folie
   In 190 ml Wasser löst man durch zweistündiges Erhitzen auf 90°C unter Rühren 9,9 g ®MOWIOL 28-99 (verseiftes Polyvinylacetat, Verseifungsgrad 99,4 ± 0,4 Mol.-%, Viskosität der 4%igen wäßrigen Lösung bei 20°C: 28 ± 2,0 mPa.sec², Hersteller: Hoechst AG) und 0,1 g Farbstoff des Beispiels 1a. Von der so erhaltenen, bezogen auf das Polymer, einprozentigen Farbstofflösung werden 92,5 g mit 5 g Methanol und 2,5 g Glycerin versetzt. Aus dieser Lösung werden mit Hilfe eines Rakels 500 µ dicke Schichten auf eine reine Glasplatte gezogen und die so erhaltenen Schichten auf einer exakt waagrecht ausgerichteten Unterlage an der Luft bei Raumtemperatur getrocknet. Die erhaltenen trockenen Folien werden von der Glasplatte abgezogen; sie haben eine violette Farbe und sind ca, 40 bis 50 µ dick.
c) Reckung der Folien
   Zur Erzeugung der dichroitischen Eigenschaften werden die Folien gereckt. Dazu werden sie in einem Trockenschrank 15 min bei 130°C temperiert und dann mit einer Geschwindigkeit von ca. 10 cm/min auf ca. 700 % ihrer ursprünglichen Länge verstreckt. Die gereckten Folien haben im Absorptionsmaximum (557 nm) mit polarisiertem Licht gemessen ein dichroitisches Verhältnis von ca. 28; Reflexionsverluste wurden bei der Messung nicht berücksichtigt.
d) Folienherstellung auf der Gießmaschine
   0,2 g Farbstoff des Beispiels 1a löst man in 100 g Wasser heiß auf. Dazu gibt man 10 g Glycerin und trägt in die erkaltete Lösung 19,8 g ®MOWIOL 28-99 unter Rühren ein. Mach einer Stunde Rühren bei Raumtemperatur erhitzt man auf 90°C und rührt so lange bei dieser Temperatur, bis nach ca. 3 Stunden eine homogene Lösung entstanden ist. Bei 50°C rührt man dann 5 g Methanol ein. Die warme Lösung wird durch eine Filterpresse unter Aufpressen von Luft filtriert und dann durch Evakuieren entgast. Die Gießlösung ist bei 30°C gießfähig und haltbar.
   Zur Erzeugung einer Folie wird die Gießlösung mit einem 250 µ-Rakel auf die auf ca. 50°C vorgewärmte Gießtrommel (Trommeldurchmesser 25 cm, Umlaufgeschwindigkeit ca. 7,5 min/Umdrehung) kontinuierlich aufgetragen. Die Schicht wird durch Überleiten von erhitzter Luft getrocknet und die verfestigte Folie von der Trommel kontinuierlich abgezogen und nachgetrocknet. Die erhaltene Folie ist etwa 40 µ dick. Sie wird wie zuvor unter c) beschrieben gereckt, wobei man ähnliche Ergebnisse erhält.
e) Ganz entsprechend wie in Beispiel 1 a erhält man durch Verwendung der angegebenen Kupplungskomponenten, analoge Farbstoffe, die nach 1b in Folien eingearbeitet werden. Durch Recken nach 1c erhält man dichroitische Folien.

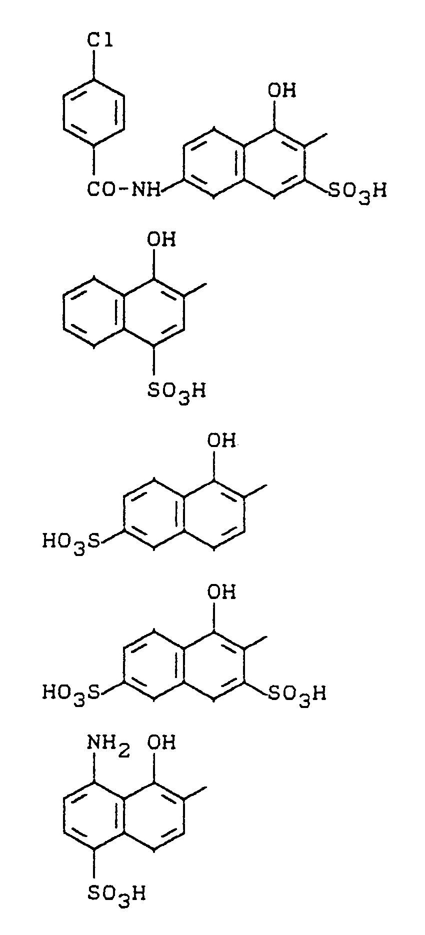

Weitere Farbstoffe wurden analog Beispiel 1a aus den folgenden Kupplungskomponenten hergestellt: 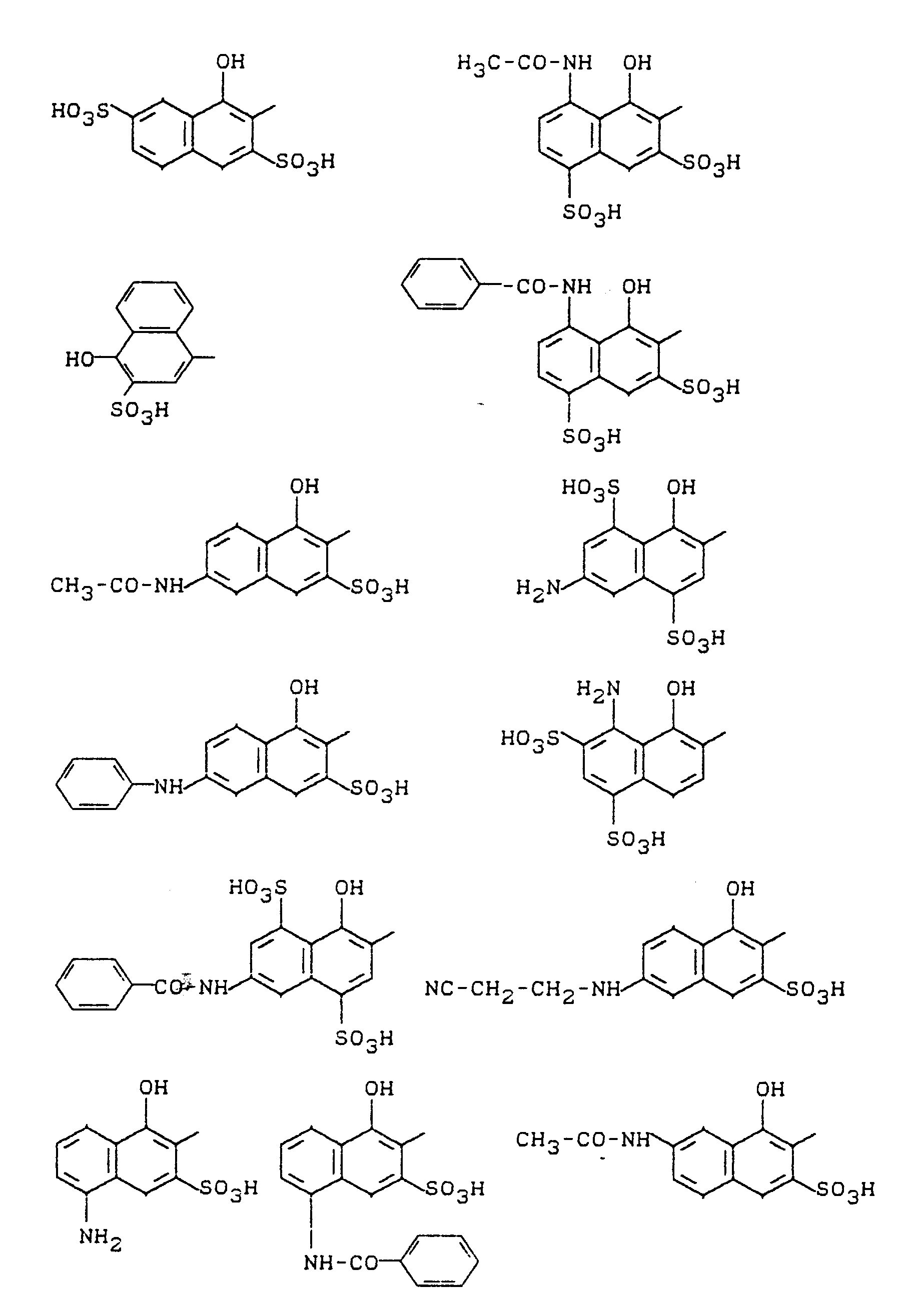 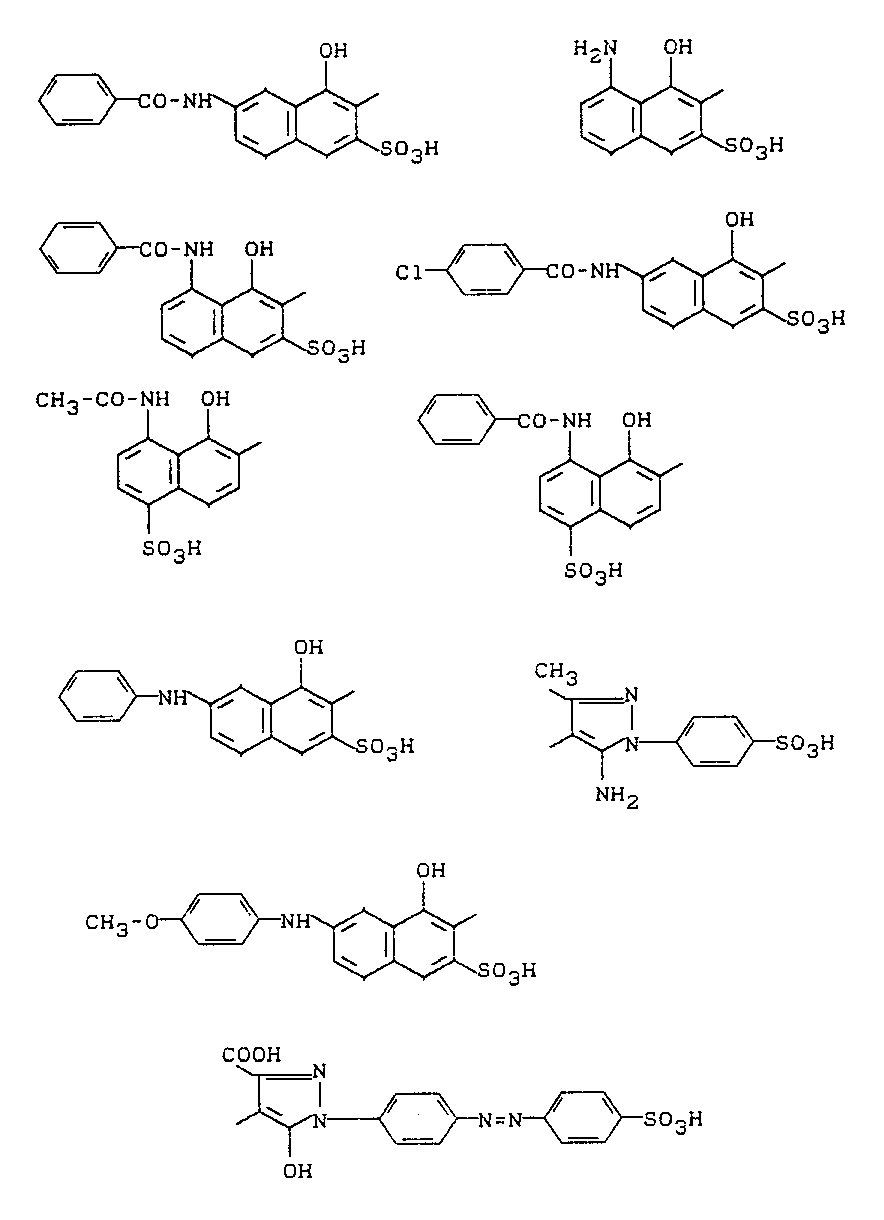 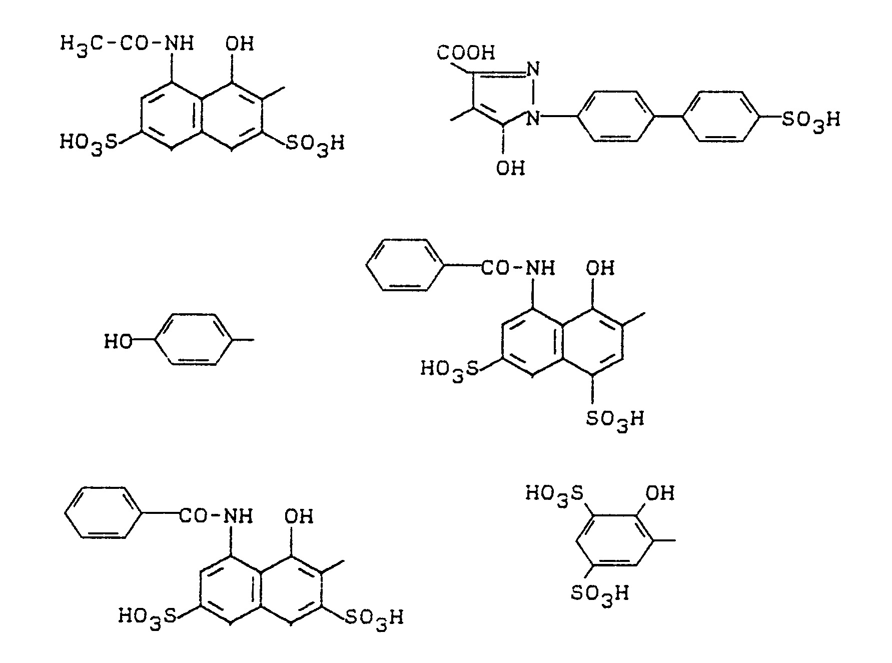
Die Kupplungsprodukte auf Phenole können durch anschließende Alkylierung (Methylierung, Ethylierung, Benzylierung) "verschlossen" werden.

### Beispiel 2

a)
   17,3 g (0,1 Mol) 4-Amino-benzol-sulfonsäure werden in 200 ccm Wasser mit ca. 7 ccm Natronlauge (45 %ig) gelöst und dann auf einmal mit 28 ccm konz. Salzsäure versetzt. Die frisch gefällte Suspension diazotiert man bei 5-10°C mit 7 g Natriumnitrit in 15 ccm Wasser. Nach 15 Minuten saugt man ab und wäscht auf dem Filter mit Eiswasser aus. Das feuchte Produkt wird sofort in 100 ccm Wasser eingetragen (Vorsicht: das trockene Produkt ist explosiv). Zur so erhaltenen Suspension des Diazoniumsalzes wird unter starkem Rühren eine kalte Lösung von 34,1 g (0,1 Mol) 8-Amino-1-hydroxy-naphthalin-3,6-disulfonsäure-mono-Na-salz und 5,5 g Natriumcarbonat in 100 ccm Wasser innerhalb von 45 Minuten zugetropft. Dann läßt man unter Erwärmen auf Raumtemperatur 12 Stunden rühren, saugt ab und wäscht neutral. Man erhält eine Farbpaste des Farbstoffs der Formel: 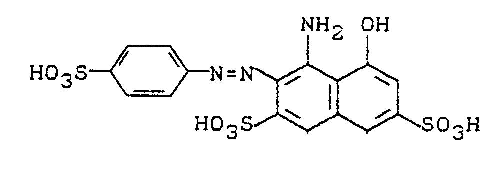
b)
   Die Farbpaste aus a) wird mit 40 g Natriumcarbonat in ca. 500 ccm Wasser gegebenenfalls unter Erwärmen gelöst und dann auf unter 10°C abgekühlt. Zu der erhaltenen Suspension tropft man innerhalb von 30 Minuten die nach Beispiel 1a hergestellte Tetrazoniumsalzlösung aus 18,5 g (0,05 Mol) 4,4'-Diamino-stilben-2,2'-disulfonsäure wobei man den pH-Wert durch Zudosieren von 10 %iger Natronlauge bei 6,5 bis 7 hält. Nach Rühren über Nacht wird der Farbstoff abgesaugt, mit Wasser neutral gewaschen und dann in Wasser gelöst zur Abtrennung von Salzen dialysiert. Die Farbstofflösung wird eingedampft und der Rückstand getrocknet. Der erhaltene Farbstoff hat die Struktur: 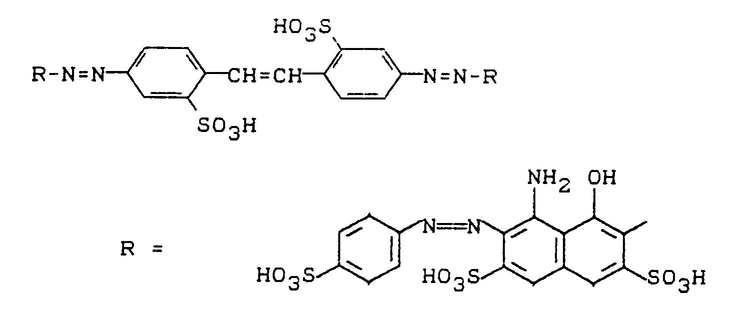
c)
   Einsetzbar sind auch die folgenden Kupplungskomponenten, die man analog 2a) herstellen kann: 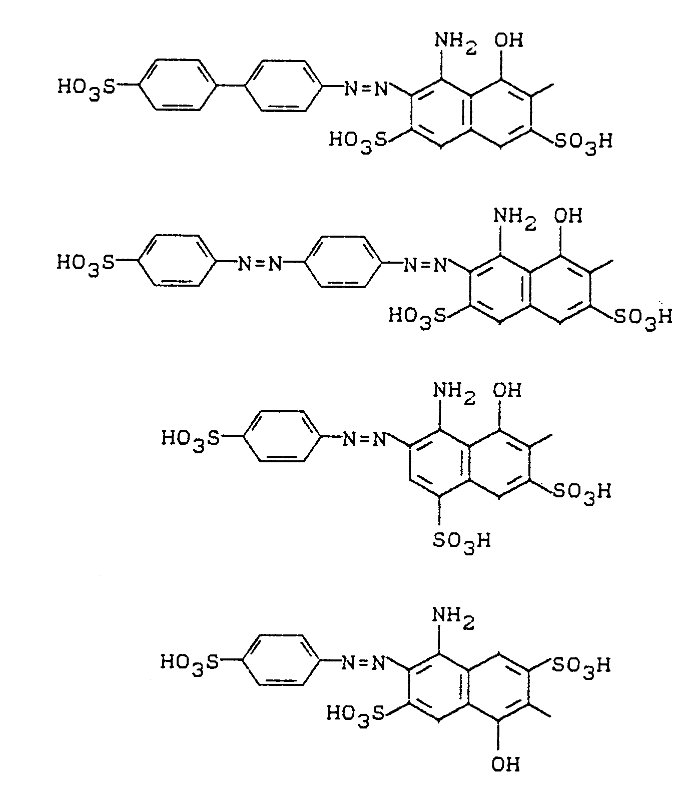 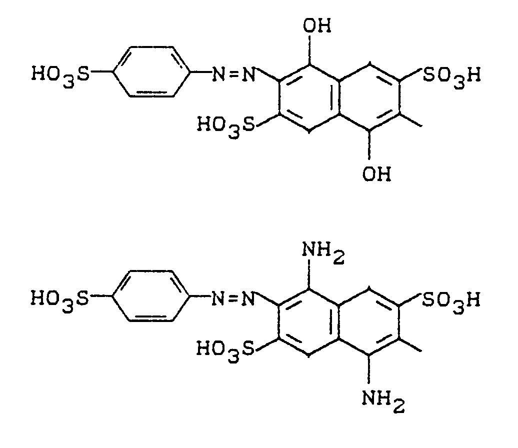
d)
   Ganz entsprechend erhält man den Farbstoff der Struktur: 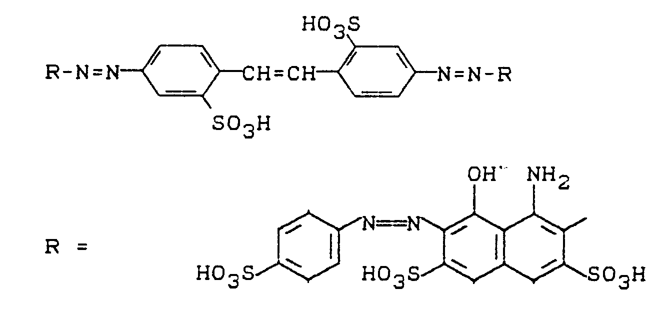 wenn man die Tetrazoniumsalzlösung des Beispiels 1a zunächst bei pH 4,5-5,5 auf 1-Hydroxy-8-amino-naphthalin-3,6-disulfonsäure kuppelt und dann bei pH 7-7,5 die nach Beispiel 2a hergestellte Diazoniumverbindung aus 4-Amino-benzol-sulfonsäure zweifach ankuppelt.

Auch mit den anderen in c) genannten Komponenten kann man in umgekehrter Reihenfolge verfahren und gelangt zu analogen Farbstoffen.

### Beispiel 3

a)
   In die nach Beispiel 1a hergestellte Tetrazoniumsalzlösung tropft man bei einer Temperatur von max. 10°C unter Rühren die Lösung von 30,6 g (0,2 Mol) 2,5-Dimethoxyanilin in 500 ccm Wasser (wobei man soviel konzentrierte Salzsäure zusetzt, daß eine klare Lösung entsteht), und hält durch gleichzeitiges Zudosieren von Natronlauge einen pH-Wert von 3 bis 4,5 ein. Nach Rühren über Nacht und Erwärmenlassen auf Raumtemperatur ist die Kupplung beendet. Man saugt ab und wäscht vorsichtig mit Wasser neutral. Der nach Trocknen erhaltene Farbstoff wiegt 52,4 g und hat die Formel: 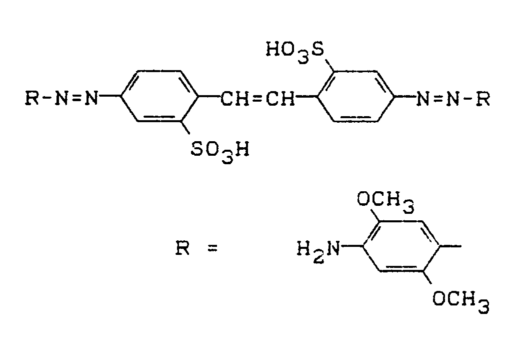 Statt des 2,5-Dimethoxy-anilins kann man auch 2-Methoxy-5-methylanilin, 2,5-Dimethylanilin, 3-Methyl-anilin, 3-Acetylaminoanilin, 1-Naphthylamin, 1-Amino-2-ethoxynaphthalin-6-sulfonsäure oder Anilinomethansulfonsäure etc. einsetzen.
b)
   Das in a) erhaltene Zwischenprodukt wird in wäßriger Salzsäure mit Natriumnitrit durch Stehen über Nacht bei Raumtemperatur tetrazotiert und die erhaltene Tetrazoniumsalzlösung nach Zerstörung des Nitritüberschusses bei pH 6,5 bis 8 auf 1-Hydroxy-6-acetylamino-naphthalin-3-sulfonsäure gekuppelt. Der erhaltene Farbstoff hat die Formel: 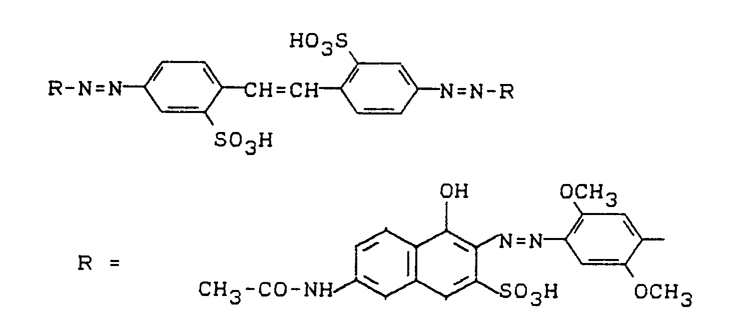
c)
   Als Komponenten der Endkupplung lassen sich auch die anderen in Beispiel 1e und 2c genannten Verbindungen einsetzen, vorzugsweise Benzoyl-I-säure, Acetyl-Gammasäure oder Acetyl-K-säure; phenolische Kupplungskomponenten können anschließend durch Alkylierung "verschlossen" werden. Die erhaltenen Farbstoffe werden in eine Folie entsprechend Beispiel 1b eingebaut, die anschließend gereckt wird.

### Beispiel 4

a)
   9,6 g (0,01 Mol) des Farbstoffs aus Beispiel 1e, der durch Kupplung des Tetrazoniumsalzes aus 1a auf 1-Hydroxy-6-acetylamino-naphthalin-3-sulfonsäure entstanden ist, werden in 200 ccm 2n Natronlauge bei 80°C so lange gerührt, bis die Acetylgruppen vollständig abgespalten sind (Verfolgung der Reaktion durch Dünnschichtchromatographie). Die Reaktionslösung wird neutralisiert, nach Erkalten abgesaugt und der Rückstand neutral gewaschen.
b)
   Der nach a) entstandene Farbstoff wird in 100 cm 1n Natronlauge gelöst, die Lösung mit 1,8 g Natriumnitrit versetzt und dann in überschüssige Salzsäure einfließen lassen. Nach Stehen über Nacht bei Raumtemperatur hat sich die Tetrazoniumsalzlösung gebildet; man zerstört überschüssiges Nitrit mit Amidosulfonsäure, tropft dann 2 g Phenol gelöst in Natronlauge ein und stellt den pH-Wert mit Natronlauge auf ca. 9. Nach 3-stündigem Rühren ist die Kupplung zuende. Man saugt ab und wäscht neutral.
c)
   Der nach b) gebildete Farbstoff wird in 100 ccm 1n Natronlauge gelöst und die Lösung unter Rühren mit 4 g Dimethylsulfat versetzt. Nach ca. 1 Stunde ist die Methylierung beendet. Man saugt ab, wäscht neutral und trocknet. Der erhaltene Farbstoff hat die Formel: 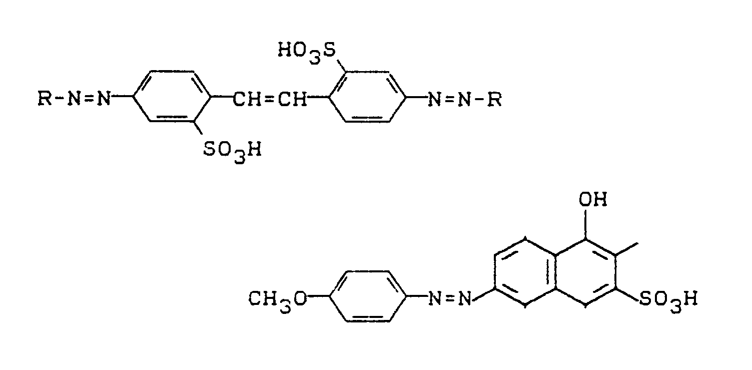 Statt mit Dimethylsulfat können die phenolischen Gruppen auch mit Diethylsulfat oder Benzylbromid in die Ether überführt werden.

Anstatt von Phenol in 4b) können auch die anderen in den Tabellen 1e und 2c angeführten Kupplungskomponenten als Endgruppen verwendet werden.

### Beispiel 5

a)
   Die Tetrazoniumsalz-Lösung aus Beispiel 1a tropft man bei ca. 10°C in die Lösung von 68,4 g (0,2 Mol) 1-Hydroxy-8-acetylaminonaphthalin-3,6-disulfonsäure, Mono-Na-salz in 0,8 l Wasser, wobei man durch Zutropfen von 2n-Natronlauge einen pH-Wert von 6,5-7,5 einhält. Anschließend läßt man unter Erwärmen auf Raumtemperatur die Kupplung über Nacht zuende gehen. Man saugt ab, wäscht mit Wasser neutral und trocknet. Ausbeute 62,5 g eines blauviolett löslichen Farbstoffs.
b)
   20 g des Farbstoffs aus 5a) werden in 200 ccm 2n-Natronlauge so lange auf ca. 80°C erhitzt, bis die Acetylgruppen abgespalten sind. Dann säuert man mit Salzsäure an, saugt ab, wäscht neutral und trocknet. Man erhält 15,3 g eines Farbstoffs, der in Form der freien Säure folgende Formel hat: 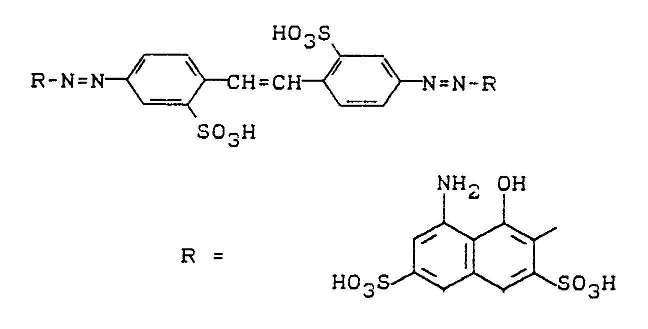 Einen entsprechenden Farbstoff erhält man auch aus der 1-Hydroxy-8-acetylamino-naphthalin-3,5-disulfonsäure nach anschließender Spaltung.

Die Farbstoffe lassen sich entsprechend Beispiel 1b in eine Folie einbauen und gemäß Beispiel 1c recken.

### "Unsymmetrische" Farbstoffe

Ein geeignetes Zwischenprodukt zur Herstellung "unsymmetrischer" Verbindungen ist die 4-Amino-4'-nitrostilben-2,2'-disulfonsäure.

### Beispiel 6

a)
   21,2 g (0,05 Mol) 4-Amino-4'-nitro-stilben-2,2'-disulfonsäure werden in 400 ccm Wasser suspendiert und mit 40 ccm konzentrierter Salzsäure versetzt` Man diazotiert durch Eintropfen von 12,8 ccm 30 %iger Natriumnitrit-Lösung (0,05 Mol + 10 %) bei max. 10°C und läßt dann über Nacht bei ca. 20°C nachrühren. Danach wird der Nitrit-Überschuß durch Zugabe von Amidosulfonsäure zerstört.
   Die erhaltene Diazoniumsalzlösung läßt man zu einer Lösung von 17,2 g (0,05 Mol) 1-Hydroxy-6-benzoylaminonaphthalin-3-sulfonsäure in 160 ccm Wasser bei ca. 20°C eintropfen, wobei man den pH-Wert durch Zutropfen von Natronlauge im Bereich von 7-8 hält. Nach Rühren über Nacht wird der ausgefallene Farbstoff abgesaugt, mit wenig Wasser neutral gewaschen und getrocknet. Ausbeute: 28,5 g (75 %). Man erhält einen Farbstoff der Struktur: 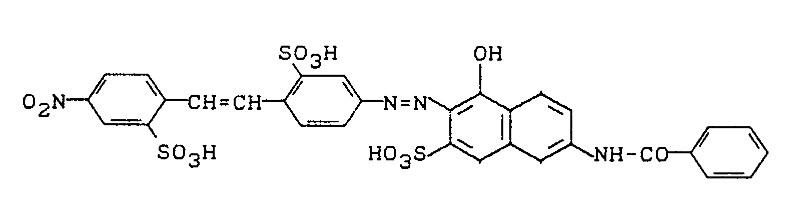 Ganz entsprechend wie zuvor beschrieben erhält man bei Ersatz der 1-Hydroxy-6-benzoylamino-naphthalin-3-sulfonsäure durch 1-Hydroxy-6-anilino-naphthalin-3-sulfonsäure einen analogen Farbstoff.
b)
   Weitere geeignete Kupplungskomponenten sind die in der Tabelle der Beispiele 1e und 2c genannten, vorzugsweise Acetyl-I-säure, Acetyl-Gamma-säure, K-säure, Acetyl-K-säure, Benzoyl-K-säure, Acetyl-H-säure, Benzoyl-H-säure, Chicago-SS-säure, Benzoyloxy-C-säure oder Phenol.

Man kann sie wie in 7a) beschrieben zu den Aminoverbindungen reduzieren; diese werden diazotiert und anschließend auf geeignete Kupplungskomponenten, z.B. solche der Tabellen der Beispiele 1e und 2c, gekuppelt.

### Beispiel 7

a)
   Der noch eine Nitrogruppe enthaltende Farbstoff des Beispiels 6a wird in einem Ethanol/Wasser-Gemisch mit Natriumsulfid oder analog den Angaben in DOS 3 805 513, Beispiel 3 zur Aminoverbindung reduziert. Eine andere Reduktionsmöglichkeit ist die mit Eisenpulver in schwach saurem wäßrigem Medium nach Bechamp.
   Ganz entsprechend kann man auch die analogen nitrogruppenhaltigen Farbstoffe des Beispiels 6b zu den Aminoverbindungen reduzieren.
b)
   18,1 g (0,025 Mol) des unter a) erhaltenen Farbstoffs suspendiert man in 300 ccm Wasser, versetzt mit 20 ccm konzentrierter Salzsäure und diazotiert durch Eintropfen von 6,4 ccm 30 %iger Natriumnitrit-Lösung (0,025 Mol + 10 %) bei max. 10°C und läßt dann über Nacht bei Raumtemperatur nachrühren. Dann wird der Nitritüberschuß durch Zugabe von Amidosulfonsäure zerstört.

Die erhaltene Diazoniumsalzlösung läßt man zu einer Lösung von 8 g (0,025 Mol) 1-Amino-8-hydroxy-naphthalin-2,4-disulfonsäure in 80 ccm Wasser bei ca. 20°C eintropfen und hält dabei den pH-Wert im Bereich von 7. Nach Rühren über Nacht wird der ausgefallene Farbstoff abgesaugt, mit wenig Wasser gewaschen und getrocknet. Der erhaltene Farbstoff hat die Struktur: 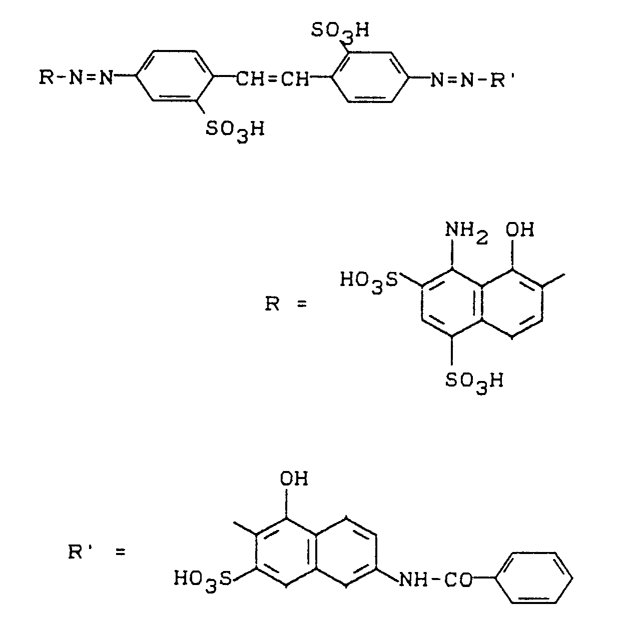
Als Kupplungskomponenten lassen sich auch die anderen in den Beispielen 1e und 2c genannten Verbindungen einsetzen.

### Beispiel 8

a)
   Man löst 5 g (ca. 0,05 Mol) Phenol in 100 ccm Wasser unter Zusatz von Natronlauge bis zur klaren Lösung und tropft hierzu bei etwa 10°C die in Beispiel 6a erhaltene Diazoniumsalzlösung, wobei man durch Zugabe von Natronlauge einen pH-Wert von etwa 9 einhält. Nach Rühren über Nacht wird neutralisiert, der Niederschlag abgesaugt und gewaschen.
   Die Feuchtpaste wird in Analogie zu den Angaben in Beispiel 4c in wäßrig alkalischer Lösung mit Dimethylsulfat umgesetzt, bis vollständige Methylierung eingetreten ist. Man erhält einen Farbstoff der Struktur: 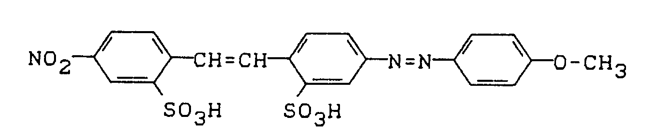 Ebenso kann man statt des Phenols auch andere (subst.) Phenole einsetzen.
   Wenn man das Dimethylsulfat durch Benzylbromid ersetzt, erhält man die entsprechende benzylierte Verbindung; auch andere Alkylierungsmittel, z.B. Diethylsulfat sind geeignet.
b)
   Der unter a) erhaltene Farbstoff wird mit Natriumsulfid in Ethanol und Wasser oder mit Eisenpulver in schwach saurem Medium zum Amin reduziert. Dieses wird analog Beispiel 6a mit Natriumnitrit diazotiert und dann überschüssiges Nitrit mit Amidosulfonsäure zerstört.

Die erhaltene Diazoniumsalzlösung wird entsprechend den weiteren Angaben in Beisiel 6a auf 1-Hydroxy-6-benzoylamino-naphthalin-3-sulfonsäure bei einem pH-Wert zwischen 7 und 8 gekuppelt, wobei man einen Farbstoff der nachstehenden Formel erhält: 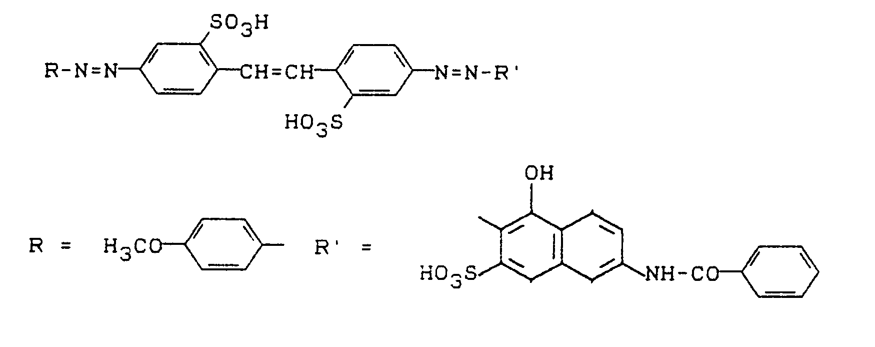
Als Komponenten der Endkupplung lassen sich auch die anderen in den Beispielen 1e und 2c genannten Verbindungen einsetzen, vorzugsweise Acetyl-I-säure, N-Phenyl-I-säure sowie Acetyl-H-säure.

Die erhaltenen Farbstoffe lassen sich entsprechend Beispiel 1h in eine Folie einbauen, die nach Beispiel 1c gereckt wird.

### Beispiel 9 (Kondensationsfarbstoffe)

Die Kondensationsreaktion zur Herstellung von Azofarbstoffen ist in Houben-Weyl, Methoden der Organischen Chemie, Bd. 10/3, Teil 3, S. 339-346 beschrieben.
a)
   Die Herstellung des folgenden Farbstoffs ist dort auf S. 343 angegeben: 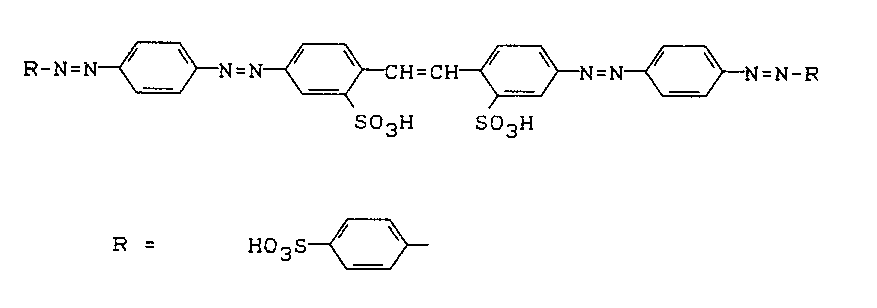
b)
   Durch entsprechende Abwandlung der dort angegebenen Vorschriften wird der folgende Farbstoff hergestellt:

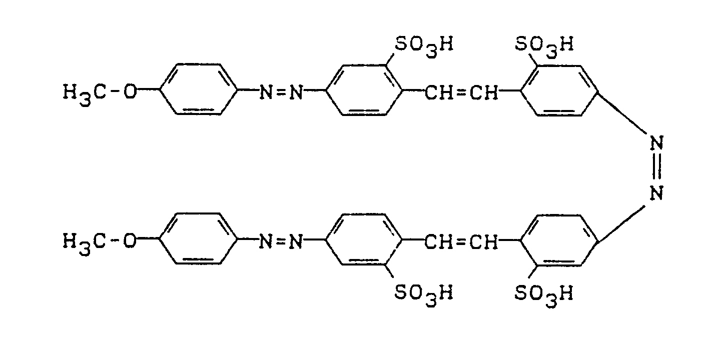

## Patentansprüche

1. Lichtpolarisierende Filme oder Folien enthaltend Farbstoffe, die in Form der freien Säure der Formel I 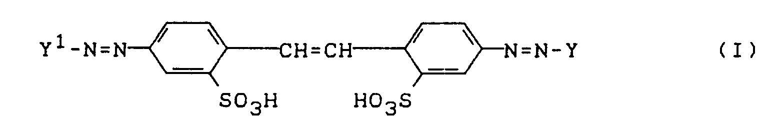 entsprechen, wobei
Y, Y¹ einen gegebenenfalls substituierten Aryl- oder heterocyclischen Rest darstellen.

2. Lichtpolarisierende Filme oder Folien enthaltend Farbstoffe des Anspruchs 1 mit 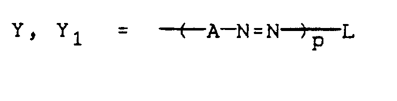 worin
A = gegebenenfalls substituiertes Phenylen oder Naphthylen
L = gegebenenfalls substituiertes Phenyl oder Naphthyl,
p = 1, 2, 3.

3. Lichtpolarisierende Filme oder Folien enthaltend Farbstoffe des Anspruchs 1 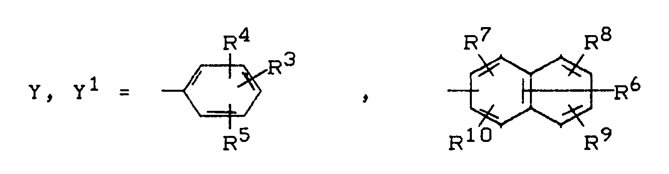 worin
R³ H, -OH, -OR¹, -NH₂, -NHR¹, -NR¹R², -NHCOR¹, -O-CO-R¹, -N=N-R¹¹, einen heterocyclischen Rest,
R¹ und R² gegebenenfalls durch O und/oder S unterbrochenes Alkyl, Cycloalkyl, Aryl oder Aralkyl,
R⁴, R⁵, R⁷, R⁸, R⁹, R¹⁰ H, Halogen, -OH, -OR¹, NH₂, -NHR¹, -NR¹R², -R¹, -SO₃H, -NHCOR¹, -O-CO-R¹, -SO₂-NH₂, -SO₂-NHR¹, -SO₂NR¹R²,
R⁶ H, -N=N-R¹¹, heterocyclischer Rest und
R¹¹ einen gegebenenfalls substituierten Arylrest, vorzugsweise einen gegebenenfalls substituierten Phenyl- oder Naphthylrest oder einen gegebenenfalls substituierten heterocyclischen Rest bezeichnen
und die höchstens 8 Azobrücken enthalten.

4. Lichtpolarisierende Filme oder Folien gemäß Ansprüchen 1-3 enthaltend Farbstoffe I
worin
Y, Y¹ und R¹¹ = Rest der Benzolreihe der Formel 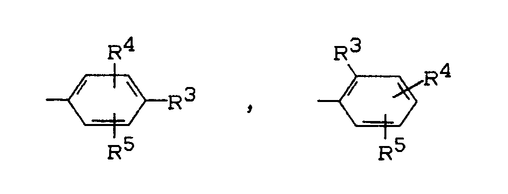
oder Rest der Naphthalinreihe der Formeln 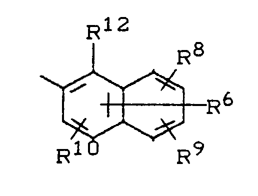 worin
R¹² = -OH, -NH₂ 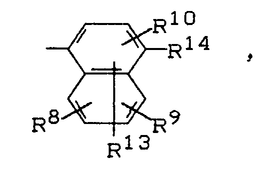
worin
R¹³ = H, wenn R¹⁴ = -N=N-R¹¹ oder H, -N=N-R¹¹, wenn R¹⁴ = -OH, -NH₂
R¹⁴ = -OH, -NH₂, -N=N-R¹¹, 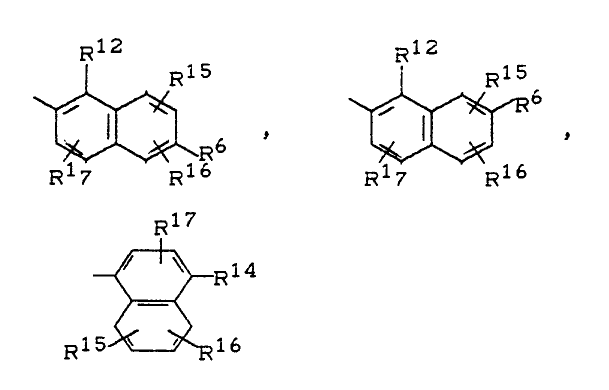
worin
R¹⁵, R¹⁶ = H, -OH, OR¹, -O-CO-R¹, -NH₂, -NHR¹, -NR¹R², -NHCOR¹, -SO₃H,
R¹⁷ = H, -SO₃H.
insbesondere der Formeln 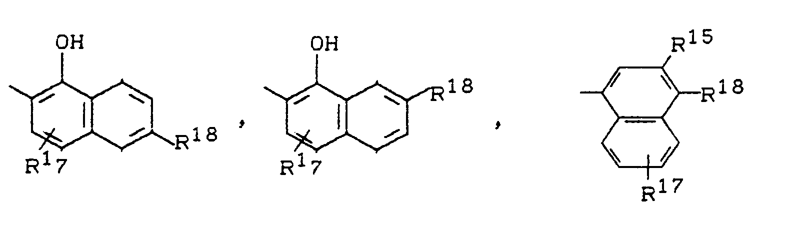 worin
R¹⁸ = H, OH, NH₂, -NH-CO-R¹, -NH-R¹, -N=N-R¹¹, -SO₃H 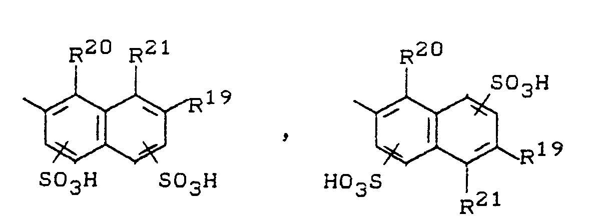
worin
R¹⁹ = H, -N=N-R¹¹,
R²⁰, R²¹ = OH, NH₂, -O-CO-R¹, -NH-CO-R¹ 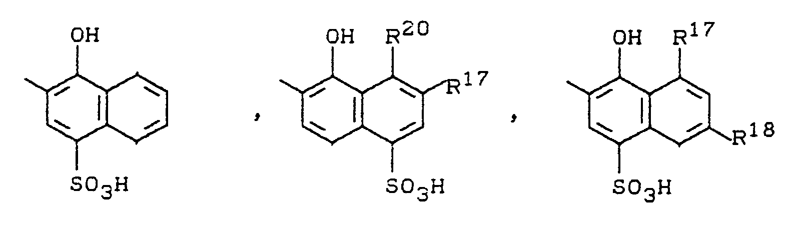
und 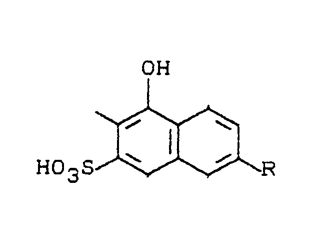 worin
R = NH-R¹, -NH-CO-R¹, -N=N-R¹¹.

5. Lichtpolarisierende Filme und Folien gemäß Ansprüchen 1 - 4 enthaltend Farbstoffe der Formel 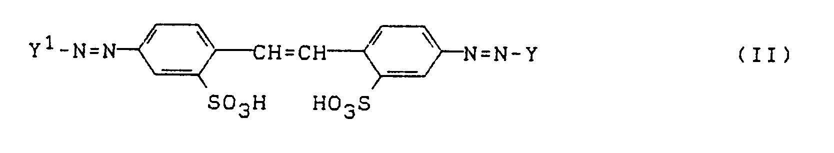 mit Y¹ = Y.

6. Filme und Folien gemäß Ansprüchen 1 -5 enthaltend Farbstoffe der Formel

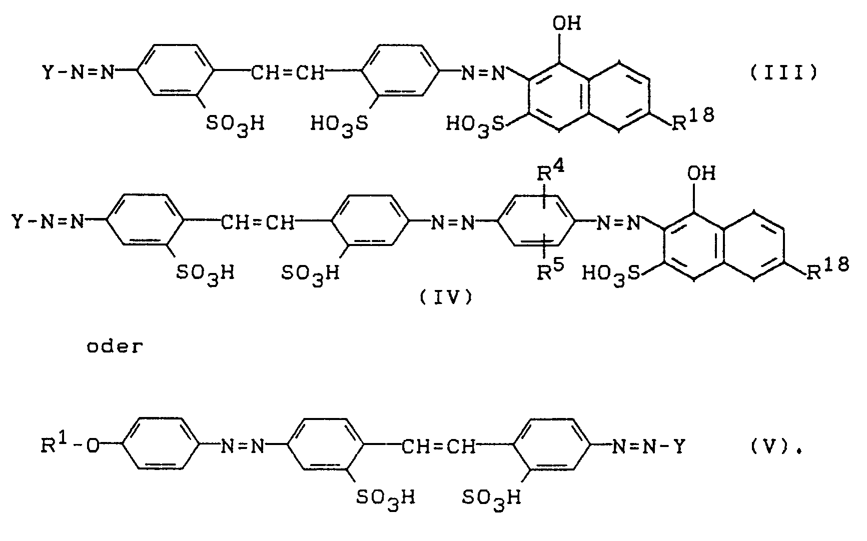

7. Lichtpolarisierende Filme oder Folien enthaltend ein organisches Polymer und einen Farbstoff gemäß den Ansprüchen 1-6.

8. Lichtpolarisierende Filme oder Folien gemäß Anspruch 7 enthaltend ein Vinylalkoholhomo- oder -copolymer.

9. Lichtpolarisierende Filme oder Folien gemäß einem oder mehreren der Ansprüche 1-8, die um 300-1000 % gestreckt worden sind.

10. Lichtpolarisierende Filme oder Folien gemäß einem oder mehreren der Ansprüche 1-9, enthaltend 0,01-10 Gew.-%, bezogen auf das Filmgewicht eines oder mehrerer Farbstoffe gemäß den Ansprüchen 1-4.

## Claims

1. Light polarizing films or sheets containing dyes which in the form of the free acid correspond to formula I 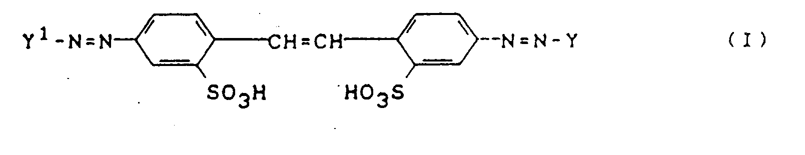 wherein
Y and Y¹ represent an optionally substituted aryl or heterocyclic group.

2. Light polarizing films or sheets containing the dyes of Claim 1 wherein 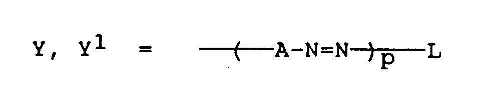 in which
A = optionally substituted phenylene or naphththylene,
L = optionally substituted phenyl or naphthyl and
p = 1, 2, 3.

3. Light polarizing films or sheets containing dyes of Claim 1 wherein 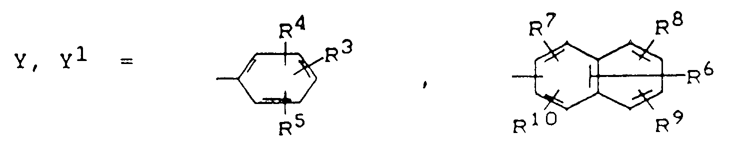 in which
R³ = H, OH, OR¹, NH₂, NHR¹, NR¹R², NHCOR¹, O-CO-R¹, N=N-R¹¹ or a heterocyclic group,
R¹ and R² = alkyl, cycloalkyl, aryl or aralkyl optionally interrupted by O and/or S,
R⁴, R⁵, R⁷, R⁸, R⁹ and R¹⁰ = H, halogen, OH, OR¹, NH₂, NHR¹, NR¹R², R¹, SO₃H, NHCOR¹, O-CO-R¹, SO₂-NH₂, SO₂-NHR¹ or SO₂NR¹R²,
R⁶ = H, N=N-R¹¹ or a heterocyclic group and
R¹¹ = an optionally substituted aryl group, preferably an optionally substituted phenyl or naphthyl group or an optionally substituted heterocyclic group,
containing at most 8 azo bridges.

4. Light polarizing films or sheets according to Claims 1 to 3 containing dyes I
wherein
Y, Y¹ and R¹¹ = a radical of the benzene series corresponding to the following formulae 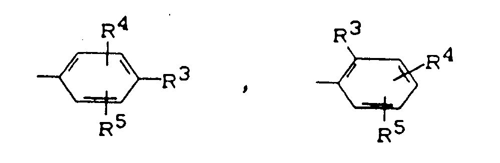 or a radical of the naphthalene series corresponding to the following formula 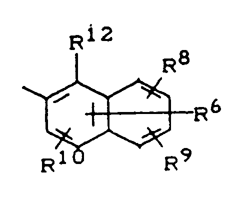 wherein
R¹² = OH, NH₂ or 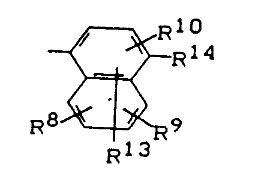
wherein
R¹³ = H when R¹⁴ = N=N-R¹¹ or H or N=N-R¹¹ when R¹⁴ = OH or NH₂,
R¹⁴ = OH, NH₂, N=N-R¹¹, 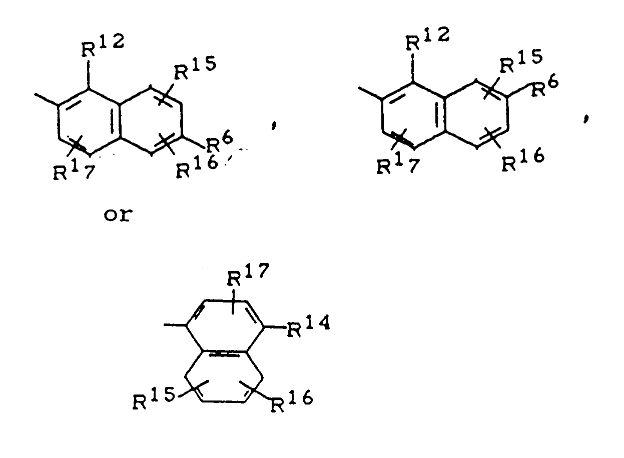
wherein
R¹⁵ and R¹⁶ = H, OH, OR¹, O-CO-R¹, NH₂, NHR¹ NR¹R², NHCOR¹, or SO₃H and
R¹⁷ = H or SO₃H,
in particular the following formulae: 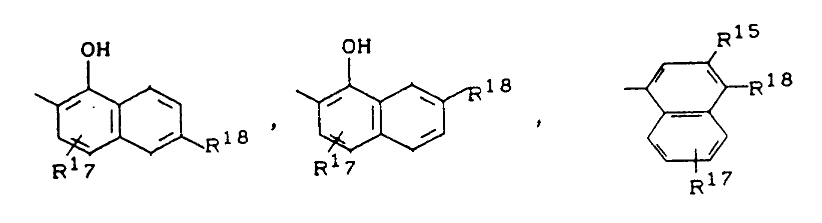 wherein
R¹⁸ = H, OH, NH₂, NH-CO-R¹, NH-R¹, N=N-R¹¹, SO₃H 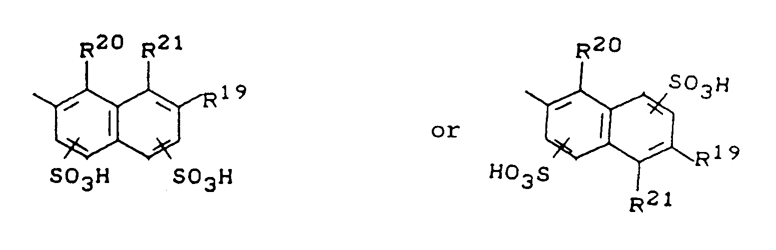
wherein
R¹⁹ = H or N=N-R¹¹ and
R²⁰ and R²¹ = OH, NH₂, O-CO-R¹, NH-CO-R¹, 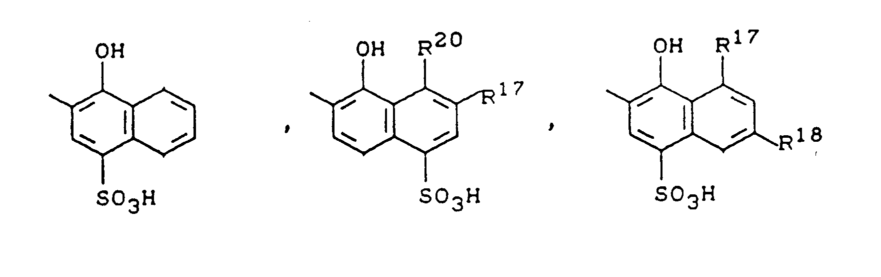
and 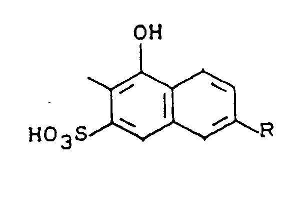 wherein
R = NH-R¹, NH-CO-R¹ or N=N-R¹¹.

5. Light polarizing films and sheets according to Claims 1 - 4, containing dyes corresponding to the formula 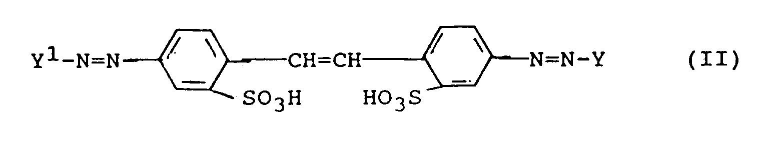 wherein Y¹ = Y.

6. Films and sheets according to Claims 1 to 5 containing dyes corresponding to the following formulae 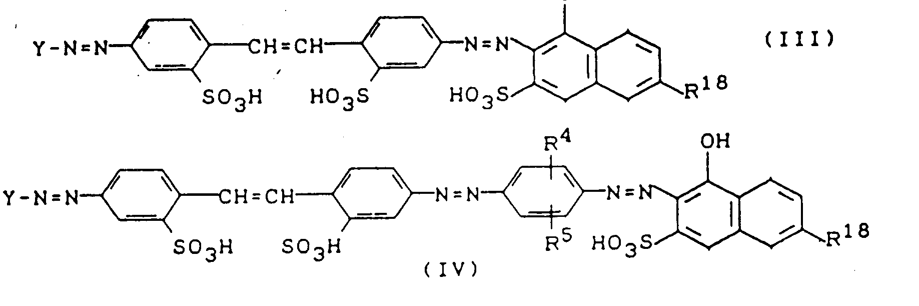 or

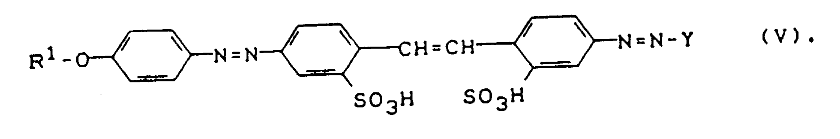

7. Light polarizing films or sheets containing an organic polymer and a dye according to Claims 1 to 6.

8. Light polarizing films or sheets according to Claim 7, containing a vinyl alcohol homo- or copolymer.

9. Light polarizing films or sheets according to one or more of Claims 1 to 8 which have been stretched by 300 to 1000%.

10. Light polarizing films or sheets according to one or more of Claims 1 to 9, containing from 0.01 to 10% by weight, based on the weight of the film, of one or more dyes according to Claims 1 to 4.

## Revendications

1. Pellicules ou feuilles polarisant la lumière, contenant des colorants qui, à l'état d'acide libre, répondent à la formule I 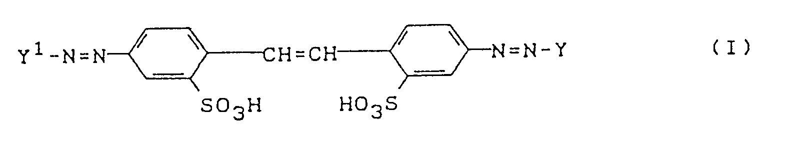 dans laquelle
Y, Y¹ représentent des radicaux aryle ou hétérocycliques éventuellement substitués.

2. Pellicules ou feuilles polarisant la lumière, contenant des colorants de la revendication 1 pour lesquels 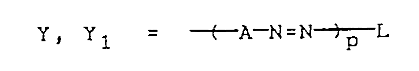 avec
A = phénylène ou naphtylène éventuellement substitué
L = phényle ou naphtyle éventuellement substitué
p = 1, 2, 3.

3. Pellicules ou feuilles polarisant la lumière, contenant des colorants de la revendication 1 pour lesquels 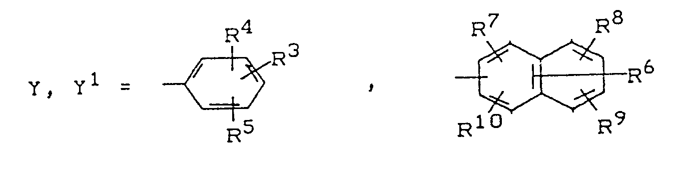 avec
R³ = H, -OH, -OR¹, -NH₂, -NHR¹, -NR¹R², -NHCOR¹, -O-CO-R¹, -N=N-R¹¹, radical hétérocyclique
R¹ et R² = alkyle, cycloalkyle, aryle ou aralkyle éventuellement interrompu par O ou S,
R⁴, R⁵, R⁷, R⁸, R⁹, R¹⁰ = H, halogène, -OH, -OR¹, -NH₂, -NHR¹, -NR¹R², -R¹, -SO₃H, -NHCOR¹, -O-CO-R¹, -SO₂-NH₂, -SO₂-NHR¹, -SO₂NR¹R²,
R⁶= H, -N=N-R¹¹,radical hétérocyclique, et
R¹¹ = aryle éventuellement substitué, de préférence phényle ou naphtyle éventuellement substitué, ou radical hétérocyclique éventuellement substitué,
avec au maximum 8 ponts azo.

4. Pellicules ou feuilles polarisant la lumière selon les revendications 1 à 3, contenant des colorants de formule I dans laquelle
Y, Y¹ et R¹¹ = radicaux de la série benzénique de formule 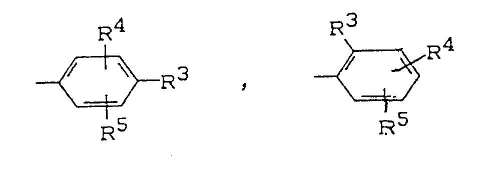 ou radicaux de la série naphtalénique de formule 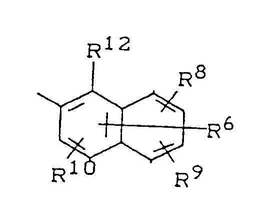 dans laquelle
R¹² = -OH, -NH₂ 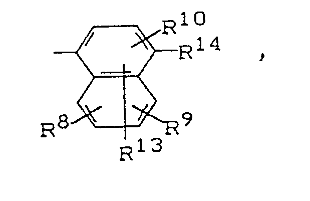 avec
R¹³ = H lorsque R¹⁴ = -N=N-R¹¹, ou H, -N=N-R¹¹ lorsque R¹⁴ = -OH, -NH₂,
R¹⁴ = -OH, -NH₂, -N=N-R¹¹, 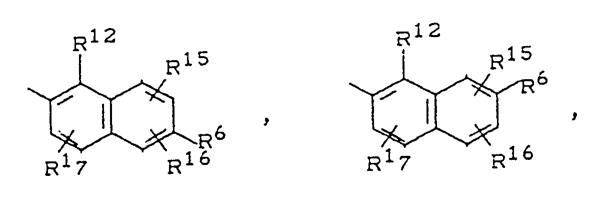 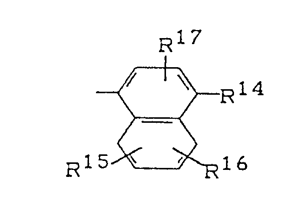 avec
R¹⁵, R¹⁶ = H, -OH, OR¹, -O-CO-R¹, -NH₂, -NHR¹, -NR¹R², -NHCOR¹, -SO₃H,
R¹⁷ = H, -SO₃H
et en particulier aux formules 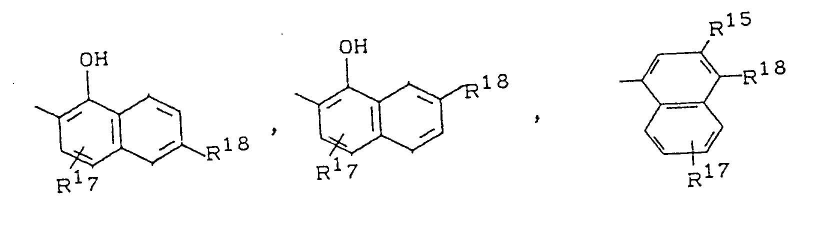 avec
R¹⁸ = H, OH, NH₂, -NH-CO-R¹, -NH-R¹, -N=N-R¹¹, -SO₃H 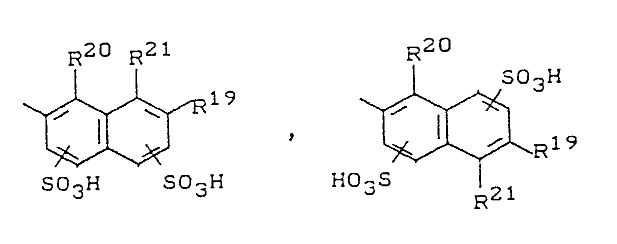
avec
R¹⁹ = H, -N=N-R¹¹,
R²⁰, R²¹ = OH, NH₂, -O-CO-R¹, -NH-CO-R¹ 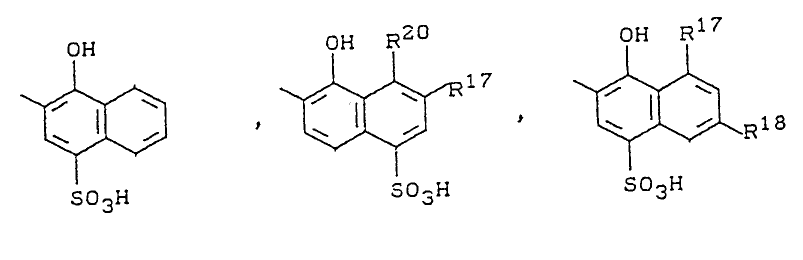
et 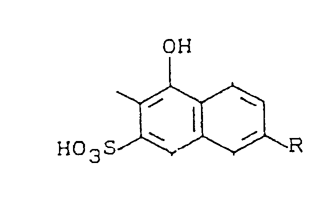 avec
R = NH-R¹, -NH-CO-R¹, -N=N-R¹¹.

5. Pellicules ou feuilles polarisant la lumière selon les revendications 1 à 4, contenant des colorants de formule 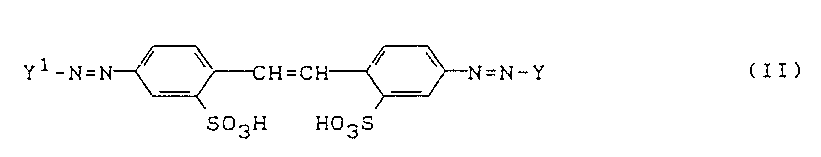 avec Y¹ = Y.

6. Pellicules ou feuilles selon les revendications 1 à 5, contenant des colorants de formule

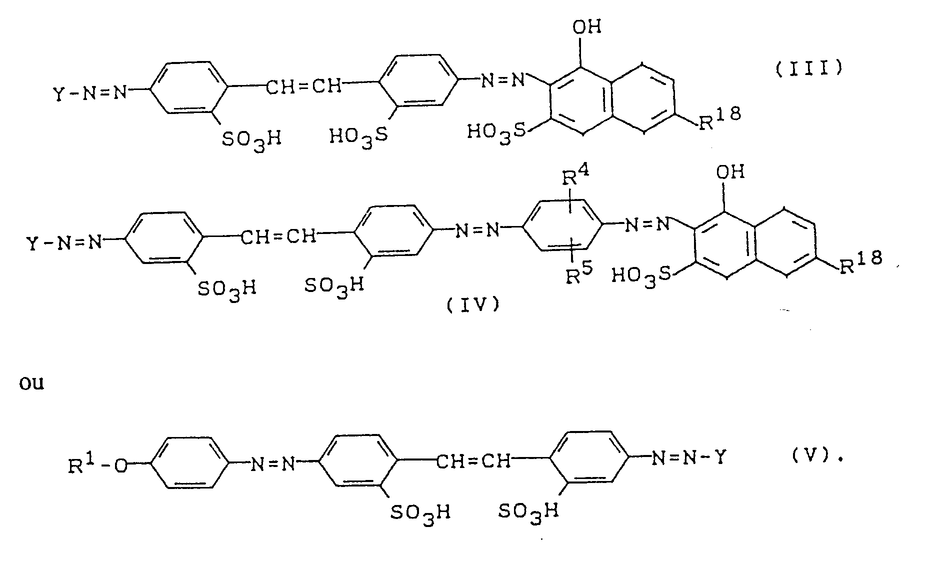

7. Pellicules ou feuilles polarisant la lumière, contenant un polymère organique et un colorant selon les revendications 1 à 6.

8. Pellicules ou feuilles polarisant la lumière selon la revendication 7, qui contiennent un homo- ou co-polymère de l'alcool vinylique.

9. Pellicules ou feuilles polarisant la lumière selon les revendications 1 à 8, qui ont été étirées de 300 à 1 000 %.

10. Pellicules ou feuilles polarisant la lumière selon une ou plusieurs des revendications 1 à 9, qui contiennent un ou plusieurs colorants selon les revendications 1 à 4, en proportions de 0,01 à 10 % du poids de la pellicule ou feuille.
